# EUROPEAN PATENT SPECIFICATION

(11) **EP 3 075 514 B1**
(45) Date of publication and mention of the grant of the patent: **07.03.2018**
(21) Application number: 16161136.3
(22) Date of filing: 18.03.2016
(51) Int. Cl.: B29C 45/17

(54) **INJECTION MOLDING MACHINE**
SPRITZGIESSMASCHINE
MACHINE DE MOULAGE À INJECTION

(30) Priority: 31.03.2015 JP 2015073971
(43) Date of publication of application: 05.10.2016
(73) Proprietor: SUMITOMO HEAVY INDUSTRIES, LTD., Tokyo 141-6025 (JP)
(72) Inventor: MITAMA, Ichiro, Kanagawa 237-8555 (JP); KIKUCHI, Tomoki, Kanagawa 237-8555 (JP); YAMANAKA, Kazuma, Kanagawa 237-8555 (JP)
(74) Representative: Louis Pöhlau Lohrentz

(56) References cited:
- EP-A1- 0 050 520
- EP-A1- 1 459 863
- DE-U1-202007 017 184

## Description

### BACKGROUND OF THE INVENTION

### Field of the Invention

The present invention relates to an injection molding machine.

### Description of Related Art

Injection molding machines have a mold clamping unit that performs mold closing, mold clamping, and mold opening of a mold unit, an injection unit that fills the inside of the mold unit with a molding material, and a frame that supports the mold clamping unit and the injection unit (for example, refer to Patent Japanese Unexamined Patent Application Publication No. 2000-185335). The mold unit has a stationary mold and a movable mold. The mold clamping unit has a stationary platen to which the stationary mold is attached, and a movable platen to which the movable mold is attached.

The mold clamping unit moves the movable platen to the stationary platen, thereby performing mold closing, mold clamping, and mold opening of the mold unit. Each of the documents EP 1 459 863 A1 and DE 2007 017 184 U1 discloses an injection molding machine with a mold clamping unit including a stationary platen and a frame that supports the mold clamping unit, wherein the frame includes a plurality of the vertical beams lined up in a mold opening/closing direction. EP 0 050 520 A1 discloses a moulding machine.

A technique capable of reducing the vibration of the stationary platen at the time of the operation of the mold clamping unit has been desired.

### SUMMARY OF THE INVENTION

The invention has been made in view of the above problems, and a main object thereof is to provide an injection molding machine that can reduce the vibration of a stationary platen at the time of the operation of a mold clamping unit.

In order to solve the above problems, according to claim 1, there is provided an injection molding machine including a mold clamping unit having a stationary platen to which a stationary mold is attached; and a frame that supports the mold clamping unit. The frame has a vertical beam for a stationary platen that supports the load of the stationary platen. A plurality of the vertical beams for a stationary platen are lined up in a mold opening/closing direction. The height from a placement surface of the stationary platen to an upper end of the stationary platen is defined as A, a mold opening/closing direction distance between a mold opening/closing direction centerline of each of the vertical beams for a stationary platen and a mold opening/closing direction centerline of the stationary platen is equal to or smaller than A. The mold opening/closing direction distance between the mold opening/closing direction centerline of at least one of the vertical beams for a stationary platen and the mold opening/closing direction centerline of the stationary platen is equal to or greater than A/2.

According to the invention, the injection molding machine that can reduce the vibration of the stationary platen at the time of the operation of the mold clamping unit is provided.

### BRIEF DESCRIPTION OF THE DRAWINGS

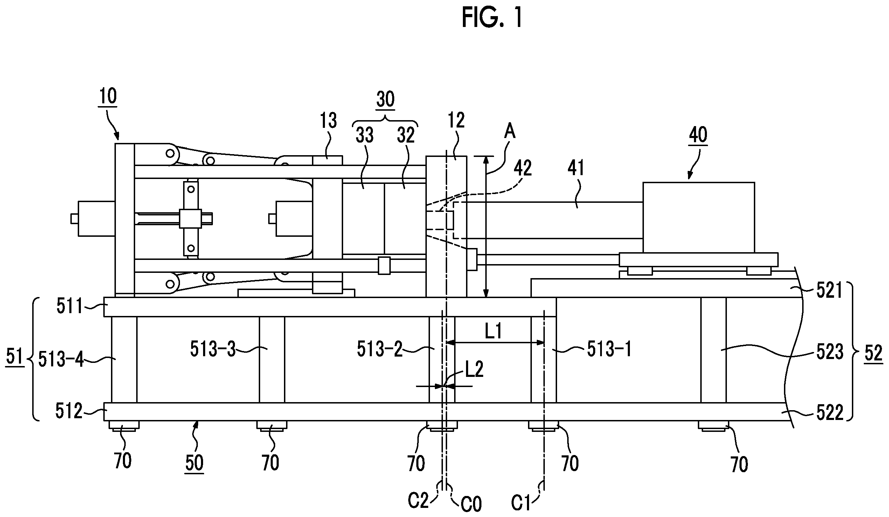

Fig. 1 is a view illustrating an injection molding machine according to an embodiment of the invention.

### DETAILED DESCRIPTION OF THE INVENTION

Hereinafter, an embodiment for carrying out the invention will be described with reference to the drawing. In the drawing, the same or corresponding components will be designated by the same or corresponding reference signs, and the description thereof will be omitted.

Fig. 1 is a view illustrating an injection molding machine according to an embodiment of the invention. The injection molding machine has a mold clamping unit 10, an injection unit 40, a frame 50, a level pad 70, and the like.

The mold clamping unit 10 performs mold closing, mold clamping, and mold opening of a mold unit 30. The mold unit 30 is configured to include a stationary mold 32 and a movable mold 33. The mold clamping unit 10 has a stationary platen 12 to which the stationary mold 32 is attached, and a movable platen 13 to which the movable mold 33 is attached. The mold clamping unit 10 moves the movable platen 13 forward and backward with respect to the stationary platen 12, thereby performing the mold closing, the mold clamping, and the mold opening of the mold unit 30.

The injection unit 40 fills the inside of the mold unit 30 in a mold clamping state with a molding material. The injection unit 40 has a cylinder 41 that heats the molding material, and a nozzle 42 provided at the tip of the cylinder 41. The injection unit 40 fills the inside of the mold unit 30 with the molding material melted within the cylinder 41 via the nozzle 42. The molding material filled within the mold unit 30 is hardened, and a molding product is obtained. The molding product is pushed out from the mold unit 30 after mold opening, and is taken out from the injection molding machine.

The frame 50 supports the mold clamping unit 10 and the injection unit 40. The frame 50 may have a mold clamping unit frame 51 and an injection unit frame 52. The mold clamping unit frame 51 supports the mold clamping unit 10. The injection unit frame 52 supports the injection unit 40.

The mold clamping unit frame 51 has an upper horizontal beam 511, a lower horizontal beam 512, and vertical beams 513-1 to 513-4. The mold clamping unit 10 is placed on the upper horizontal beam 511, and the lower horizontal beam 512 is installed onafloor. The vertical beams 513-1 to 513-4 are pillars parallel to the upward-downward direction, and connect the upper horizontal beam 511 and the lower horizontal beam 512.

The vertical beams 513-1 to 513-4 support the load of the mold clamping unit 10. The vertical beams 513-1 and 513-2, which support the load of the stationary platen 12, among the vertical beams 513-1 to 513-4, are referred to as the vertical beam 513-1 and 513-2 for a stationary platen.

In the present embodiment, a plurality of vertical beams 513-1 and 513-2 for a stationary platen are lined up in a mold opening/closing direction. Compared to a case where the number of vertical beams for a stationary platen is one, the rigidity of the mold clamping unit frame 51 with respect to the rotation of the stationary platen 12 around a horizontal axis (an axis in a paper surface vertical direction in Fig. 1) perpendicular to the mold opening/closing direction and the upward-downward direction can be improved, and the vibration of the stationary platen 12 can be reduced.

Mold opening/closing direction distances L1 and L2 (L1>0, L2>0) between respective mold opening/closing direction centerlines C1 and C2 of the plurality of vertical beams 513-1 and 513-2 for a stationary platen, and a mold opening/closing direction centerline C0 of the stationary platen 12 is equal to or smaller than the height A from a placement surface of the stationary platen 12 to an upper end of the stationary platen 12. Since the plurality of mold opening/closing direction distances L1 and L2 are equal to or smaller than A, respectively, deflection of the upper horizontal beam 511 caused by the load of the stationary platen 12 can be suppressed.

In at least one of the plurality of vertical beams 513-1 and 513-2 for a stationary platen, the above mold opening/closing direction distance may be equal to or smaller than A/2 (L2 in the drawing). Since the mold opening/closing direction distance L2 is A/2 or smaller, the deflection of the upper horizontal beam 511 caused by the load of the stationary platen 12 can be further suppressed.

The above mold opening/closing direction distance (L2 in the drawing) of at least one of the plurality of vertical beams 513-1 and 513-2 for a stationary platen may be smaller than A/2, and the above mold opening/closing direction distance (L1 in the drawing) of the remaining at least one is equal to or greater than A/2 and equal to or smaller than A. Since the mold opening/closing direction distance L1 is equal to or greater than A/2, the rigidity of the mold clamping unit frame 51 with respect to the rotation of the stationary platen 12 around the above horizontal axis can be further improved, and the vibration of the stationary platen can be further reduced.

At least one of the plurality of vertical beams 513-1 and 513-2 for a stationary platen may be located immediately below the stationary platen 12. For example, the mold opening/closing direction distance L2 may be zero.

In each of the plurality of vertical beams 513-1 and 513-2 for a stationary platen, a mold opening/closing direction centerline thereof may be disposed on any of a right side (a side opposite to the movable platen 13) and a left side (the same side as the movable platen 13) with the mold opening/closing direction centerline C0 of the stationaryplaten 12 as a reference.

In addition, vertical beams for a stationary platen may be bisymmetrically disposed with the mold opening/closing direction centerline C0 of the stationaryplaten 12 as a reference.

Additionally, all the above mold opening/closing direction distances L1 and L2 of the plurality of vertical beams 513-1 and 513-2 for a stationary platen may be only equal to or smaller than A/2, or may be only equal to or greater than A/2 and equal to or smaller than A.

The injection unit frame 52 has an upper horizontal beam 521, a lower horizontal beam 522, and a vertical beam 523. The injection unit 40 is placed on the upper horizontal beam 521, and the lower horizontal beam 522 is installed on a floor. The vertical beam 523 is a pillar parallel to the upward-downward direction, and connects the upper horizontal beam 521 and the lower horizontal beam 522.

The upper horizontal beam 521 of the injection unit frame 52 may be disposed at a different stage above the upper horizontal beam 511 of the mold clamping unit frame 51, or for example, may be placed on the upper horizontal beam 511 of the mold clamping unit frame 51. In this case, since the mold clamping unit frame 51 extends to the injection unit frame 52 side, the mold opening/closing direction distance L1 between the mold opening/closing direction centerline C1 of the vertical beam 513-1 for a stationary platen and the mold opening/closing direction centerline C0 of the stationary platen 12 can be set to be large.

In addition, although the upper horizontal beam 521 of the injection unit frame 52 of the present embodiment is disposed at a stage different from the upper horizontal beam 511 of the mold clamping unit frame 51, the upper horizontal beam 521 may be disposed at the same height as the upper horizontal beam 511 of the mold clamping unit frame 51. The injection unit frame 52 and the mold clamping unit frame 51 may be integrally formed.

A level pad 70 adjusts the height of the frame 50. The level pad 70 is attached to the lower horizontal beam 512 of the mold clamping unit frame 51 or the lower horizontal beam 522 of the injection unit frame 52, and is installed on a floor. The level pad 70 adjusts the height of the lower horizontal beam 512 of the mold clamping unit frame 51 from the floor or the lower horizontal beam 522 of the injection unit frame 52 from the floor.

Level pads 70 may be disposed at positions corresponding to the respective vertical beams 513-1 and 513-2 for a stationary platen. For example, the level pads 70 maybe disposed in regions obtained by extending the respective vertical beams 513-1 and 513-2 for a stationary platen downward. At least some of the level pads 70 just have to overlap the above regions. Deflection of the respective vertical beam 513-1 and 513-2 for a stationary platen caused by the load of the stationary platen 12 can be suppressed.

It is more preferable that the centerlines of the level pads 70 overlap the centerlines of the respective vertical beams 513-1 and 513-2 for a stationary platen.

Although the embodiment of the injection molding machine has been described above, the invention is not limited to the above-described embodiment, and various alterations and improvements can be made within the scope of the invention described in the claims.

For example, the thickness of the vertical beams 513-1 and 513-2 for a stationary platen may be greater than the thickness of the vertical beam 523 of the injection unit frame 52.

## Claims

1. An injection molding machine comprising:
a mold clamping unit (10) including a stationary platen (12) to which a stationary mold (32) is attached; and
a frame (51) that supports the mold clamping unit (10),
wherein the frame (50) has a vertical beam (513-2) for a stationary platen (12) that supports the load of the stationary platen (12), and
wherein a plurality of the vertical beams (513-1, 513-2) for a stationary platen (12) are lined up in a mold opening/closing direction,
**characterized in that**
the height from a placement surface of the stationary platen (12) to an upper end of the stationary platen (12) is defined as A, a mold opening/closing direction distance (L1, L2) between a mold opening/closing direction centerline (C1, C2) of each of the vertical beams (513-1, 513-2) for the stationary platen (12) and a mold opening/closing direction centerline (C0) of the stationary platen (12) is equal to or smaller than A, wherein the mold opening/closing direction distance (L1) between the mold opening/closing direction centerline (C1) of at least one of the vertical beams (513-1) for the stationary platen (12) and the mold opening/closing direction centerline (C0) of the stationary platen (12) is equal to or greater than A/2.

2. The injection molding machine according to Claim 1,
wherein the mold opening/closing direction distance (L2) between the mold opening/closing direction centerline (C2) of at least one of the vertical beams (513-2) for a stationary platen (12) and the mold opening/closing direction centerline (C0) of the stationary platen (12) is equal to or smaller than A/2.

3. The injection molding machine according to any one of Claims 1 to 2, further comprising:
a level pad (70) that adjusts the height of the frame (51) at a position corresponding to each of the vertical beams (513-1, 513-2) for a stationary platen (12).

## Patentansprüche

1. Spritzgießmaschine, umfassend:
eine Schließeinheit (10), umfassend eine feststehende Platte (12), an der eine feststehende Form (32) befestigt ist,
und einen Rahmen (51), der die Schließeinheit (10) trägt,
wobei der Rahmen (50) einen vertikalen Balken (513-2) für eine feststehende Platte (12) aufweist, welcher die Last der feststehenden Platte (12) trägt, und
wobei eine Vielzahl der vertikalen Balken (513-1, 513-2) für eine feststehende Platte (12) entlang einer Richtung aufgereiht sind, in der sich die Form öffnet und schließt,
**dadurch gekennzeichnet ist, dass**
die Höhe von einer Platzierungsfläche der feststehenden Platte (12) bis zu einem oberen Ende der feststehenden Platte (12) als A definiert ist, ein Abstand (L1, L2) in Formöffnungs-/ Schließrichtung zwischen einer Mittellinie (C1, C2) jedes der vertikalen Balken (513-1, 513-2) für die feststehende Platte (12) in Formöffnungs-/ Schließrichtung und einer Mittellinie (C0) der feststehenden Platte (12) in Formöffnungs-/ Schließrichtung gleich oder kleiner A ist, wobei der Abstand (L1) in Formöffnungs-/ Schließrichtung zwischen einer Mittellinie (C1) wenigstens eines der vertikalen Balken (513-1) für die feststehende Platte (12) in Formöffnungs-/ Schließrichtung und der Mittellinie (C0) der feststehenden Platte (12) in Formöffnungs-/ Schließrichtung gleich oder größer als A/2 ist.

2. Spritzgießmaschine nach Anspruch 1,
wobei der Abstand (L2) in Formöffnungs-/ Schließrichtung zwischen einer Mittellinie (C2) wenigstens eines der vertikalen Balken (513-2) für eine feststehende Platte (12) in Formöffnungs-/ Schließrichtung und der Mittellinie (C0) der feststehenden Platte (12) in Formöffnungs-/ Schließrichtung gleich oder kleiner als A/2 ist.

3. Spritzgießmaschine nach einem der Ansprüche 1 oder 2, weiter umfassend
eine Ausgleichsplatte (70), welche die Höhe des Rahmens (51) an einer Stelle einstellt, die jedem der vertikalen Balken (513-1, 513-2) für eine feststehende Platte (12) entspricht.

## Revendications

1. Machine de moulage par injection comprenant :
une unité de fixation de moule (10) comprenant un plateau stationnaire (12) sur lequel est fixé un moule stationnaire (32) ; et
un châssis (51) qui supporte l'unité de fixation de moule (10),
dans laquelle le châssis (50) possède un bras vertical (513-2) destiné à un plateau stationnaire (12) qui supporte la charge du plateau stationnaire (12), et
dans laquelle plusieurs des bras verticaux (513-1, 513-2) destinés à un plateau stationnaire (12) sont alignés dans une direction d'ouverture/de fermeture du moule,
**caractérisée en ce que**
la hauteur entre une surface de placement du plateau stationnaire (12) et une extrémité supérieure du plateau stationnaire (12) est définie comme A, une distance de direction d'ouverture/de fermeture de moule (L1, L2) entre une ligne centrale de direction d'ouverture/de fermeture de moule (C1, C2) de chacun des bras verticaux (513-1, 513-2) destinés au plateau stationnaire (12) et une ligne centrale de direction d'ouverture/de fermeture de moule (C0) du plateau stationnaire (12) est égale ou inférieure à A, la distance de direction d'ouverture/de fermeture de moule (L1) entre la ligne centrale de direction d'ouverture/de fermeture de moule (C1) d'au moins l'un des bras verticaux (513-1) destinés au plateau stationnaire (12) et la ligne centrale de direction d'ouverture/de fermeture de moule (C0) du plateau stationnaire (12) étant égale ou supérieure à A/2.

2. Machine de moulage par injection selon la revendication 1,
dans laquelle la distance de direction d'ouverture/de fermeture de moule (L2) entre la ligne centrale de direction d'ouverture/de fermeture de moule (C2) d'au moins l'un des bras verticaux (513-2) destinés à un plateau stationnaire (12) et la ligne centrale de direction d'ouverture/de fermeture de moule (C0) du plateau stationnaire (12) est égale ou inférieure à A/2.

3. Machine de moulage par injection selon l'une quelconque des revendications 1 à 2, comprenant en outre :
un bloc de nivellement (70) qui ajuste la hauteur du châssis (51) à un emplacement correspondant à chacun des bras verticaux (513-1, 513-2) destinés à un plateau stationnaire (12).
